# EUROPEAN PATENT SPECIFICATION

(11) **EP 2 879 888 B1**
(45) Date of publication and mention of the grant of the patent: **08.03.2017**
(21) Application number: 13826042.7
(22) Date of filing: 25.07.2013
(51) Int. Cl.: B60C 11/03, B60C 11/11, B60C 13/00, B60C 11/00, B60C 11/13, B60C 13/04

(54) **TIRE WITH LAMINATE**
REIFEN MIT LAMINAT
PNEU AYANT UN STRATIFIÉ

(30) Priority: 31.07.2012 US 201261678075 P; 15.05.2013 US 201313895149
(43) Date of publication of application: 10.06.2015
(60) Divisional application: 17152422.6
(73) Proprietor: Bridgestone Americas Tire Operations, LLC, Nashville, Tennessee 37214 (US)
(72) Inventor: BUXTON, Todd Alan, Norton, Ohio 44203 (US); BERZINS, Michael A., Brecksville, Ohio 44141 (US); STUCKEY, Jon I., Louisville, Ohio 44641 (US); RETHMEL, Benjamin Robert, Rittman, Ohio 44230 (US); CLEMMER, Kathleen, Akron, Ohio 44301 (US); GIVENS, Sam, Copley, Ohio 44321 (US)
(74) Representative: Banzer, Hans-Jörg
(86) International application number: PCT/US2013/052098
(87) International publication number: WO 2014/022199

(56) References cited:
- EP-A1- 1 512 554
- EP-A1- 1 892 126
- EP-B1- 0 370 664
- WO-A1-2010/072234
- JP-A- H1 081 112
- JP-A- H10 272 706
- JP-A- 2008 144 044
- KR-B1- 100 297 446

## Description

### FIELD OF INVENTION

The present disclosure relates to a tire having a laminate disposed thereon and to methods of its preparation. More particularly, the present disclosure relates to a tire with a laminate having different attributes than the underlying base compound.

### BACKGROUND

Known tire treads are rubber compositions which contain at least some carbon black reinforcement and are thereby black in color. The rubber of a tread may be selected for its material properties, such as its hardness. As the tread wears, the tread rubber maintains the same material properties.

JP H10 81112 A discloses a pneumatic tire according to the preamble of claim 1. The tire has a tread with a cap/base construction, wherein the tread has a plurality of lugs. At least the bottoms of the lugs are coated with an elastic mud-adhesion prevention layer in order not to be clogged up with mud irrespective of the condition of soil.

EP 1 892 126 A1 discloses a pneumatic tire having a tread with a cap/base construction, wherein the cap is harder than the base. The tread is formed such that the rollover resistance can be improved while retaining the driving stability.

WO 2010/072234 A1 discloses a pneumatic tire having a tread with a cap/base construction, wherein the base is made of a first elastomeric material with a first tear strength. A plurality of circumferential grooves is formed in the tread, and at least one of the grooves includes a protective layer of a second elastomeric material with a second tear strength superimposed on at least the groove bottom. This protective layer has a higher elongation at break as the base.

### SUMMARY OF THE INVENTION

According to the invention, a tire as defined in claim 1 is provided. The dependent claims define preferred or advantageous embodiments of the invention. In one embodiment, a tire includes a pair of sidewalls and a circumferential tread constructed of a base rubber. The circumferential tread has a plurality of bars and a plurality of valleys disposed between the plurality of bars. The tire further includes a polymeric laminate disposed on the circumferential tread, such that the polymeric laminate covers the plurality of bars and the plurality of valleys. The polymeric laminate has a greater hardness than the base rubber, and the polymeric laminate has a greater elongation at break than the base rubber.

In another embodiment, a tire includes a circumferential tread constructed of a base material. The circumferential tread has a plurality of bars, each of the plurality of bars having a top surface and a plurality of side surfaces. The circumferential tread further has a plurality of valleys disposed between the plurality of bars. A laminate covers at least some of the plurality of valleys. The laminate has a greater elongation at break than the base material.

In yet another embodiment, an agricultural tire includes a pair of sidewalls and a circumferential tread constructed of a base rubber. The circumferential tread has a plurality of bars, each of the plurality of bars having a top surface and a plurality of side surfaces. The circumferential tread further has a plurality of valleys disposed between the plurality of bars. A laminate is disposed on the circumferential tread, such that the laminate covers at least a portion of the side surfaces of the plurality of bars and further covers the plurality of valleys. The base rubber has a lower elongation at break than the polymeric laminate.

### BRIEF DESCRIPTION OF DRAWINGS

In the accompanying drawings, structures are illustrated that, together with the detailed description provided below, describe exemplary embodiments of the claimed invention. Like elements are identified with the same reference numerals. It should be understood that elements shown as a single component may be replaced with multiple components, and elements shown as multiple components may be replaced with a single component. The drawings are not to scale and the proportion of certain elements may be exaggerated for the purpose of illustration.
**Figure 1** is a perspective view of one embodiment of a tire having a laminate disposed thereon;
**Figure 2** is a cross-section of one embodiment of a tire having a laminate disposed on a circumferential tread;
**Figure 3** is a cross-section of one embodiment of a tire having a laminate disposed in grooves of a circumferential tread;
**Figure 4** is a cross-section of one embodiment of a tire having a laminate disposed on a circumferential tread and a pair of sidewalls; and
**Figure 5** is a cross-section of one embodiment of a tire having a laminate disposed on a pair of sidewalls.

### DETAILED DESCRIPTION

The following includes definitions of selected terms employed herein. The definitions include various examples or forms of components that fall within the scope of a term and that may be used for implementation. The examples are not intended to be limiting. Both singular and plural forms of terms may be within the definitions.

"Axial" or "axially" refer to a direction that is parallel to the axis of rotation of a tire.

"Bar" or "bars" refer to the raised portion of the tread.

"Bead" refers to the part of the tire that contacts the wheel and defines a boundary of the sidewall.

"Circumferential" and "circumferentially" refer to a direction extending along the perimeter of the surface of the tread perpendicular to the axial direction.

"Equatorial plane" refers to the plane that is perpendicular to the tire's axis of rotation and passes through the center of the tire's tread.

"Radial" and "radially" refer to a direction perpendicular to the axis of rotation of a tire.

"Sidewall" refers to that portion of the tire between the tread and the bead.

"Tread" refers to that portion of the tire that comes into contact with the road under normal inflation and load.

"Valley" or "valleys" refer to the void between bars on a tread.

Directions are stated herein with reference to the axis of rotation of the tire. The terms "upward" and "upwardly" refer to a general direction towards the tread of the tire, whereas "downward" and "downwardly" refer to the general direction towards the axis of rotation of the tire. Thus, when relative directional terms such as "upper" and "lower" or "top" and "bottom" are used in connection with an element, the "upper" or "top" element is spaced closer to the tread than the "lower" or "bottom" element. Additionally, when relative directional terms such as "above" or "below" are used in connection with an element, an element that is "above" another element is closer to the tread than the other element.

The terms "inward" and "inwardly" refer to a general direction towards the equatorial plane of the tire, whereas "outward" and "outwardly" refer to a general direction away from the equatorial plane of the tire and towards the sidewall of the tire. Thus, when relative directional terms such as "inner" and "outer" are used in connection with an element, the "inner" element is spaced closer to the equatorial plane of the tire than the "outer" element.

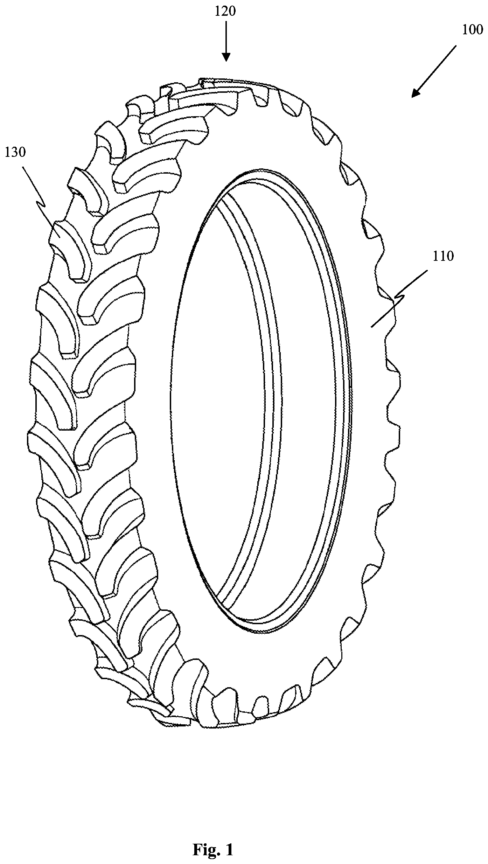

**Figures 1-5** show various embodiments of tires having a laminate disposed on at least a portion of the external surface of the tire. The laminate may be rubber, a rubber fabric composite, or another polymeric material. In one embodiment, the laminate has a nominal thickness of 1.0 to 10.0 millimeters. In another embodiment, the laminate has a nominal thickness of less than 1.0 millimeter. However, it should be understood that thicker laminates may be employed. For example, in certain embodiments, it may be desirable to use a thicker laminate on larger tires. Accordingly, the thickness of the laminate may be scaled according to tire size. For example, in certain embodiments, the thickness of the laminate may be 25% of the base material. In other embodiments, the thickness of the laminate may be 50% of the base material. The desired thickness may vary according to the application, and expected speed of the vehicle. The thickness of the laminate may be exaggerated in the drawings for illustrative purposes.

**Figure 1** illustrates a perspective view of one embodiment of a tire **100** having a laminate **110** disposed thereon. In the illustrated embodiment, the laminate **110** covers substantially the entire external surface of the tire. In the illustrated embodiment, tire **100** has a circumferential tread **120** with a plurality of bars **130**. In alternative embodiments (not shown), the tire may include one or more solid circumferential ribs, or one or more blocks. It should be understood that the tire is not limited to having any particular tread design.

The circumferential tread **120** is constructed of a base rubber, or base material. The laminate **110** is constructed of a material different from the base material. Accordingly, the laminate **110** has different properties from the underlying circumferential tread **120**.

While **Figure 1** illustrates a tire **100** suitable for an agricultural vehicle, this tire is merely exemplary. It should be understood that the laminates described herein may be employed on tires for any vehicle, including without limitation, bicycles, motorcycles, all-terrain vehicles, cars, trucks, tractors and other agricultural vehicles, off-road vehicles, mining vehicles, airplanes, and all other wheeled vehicles. The material properties of the laminate may be varied according to the vehicle type, and the expected use of the tire.

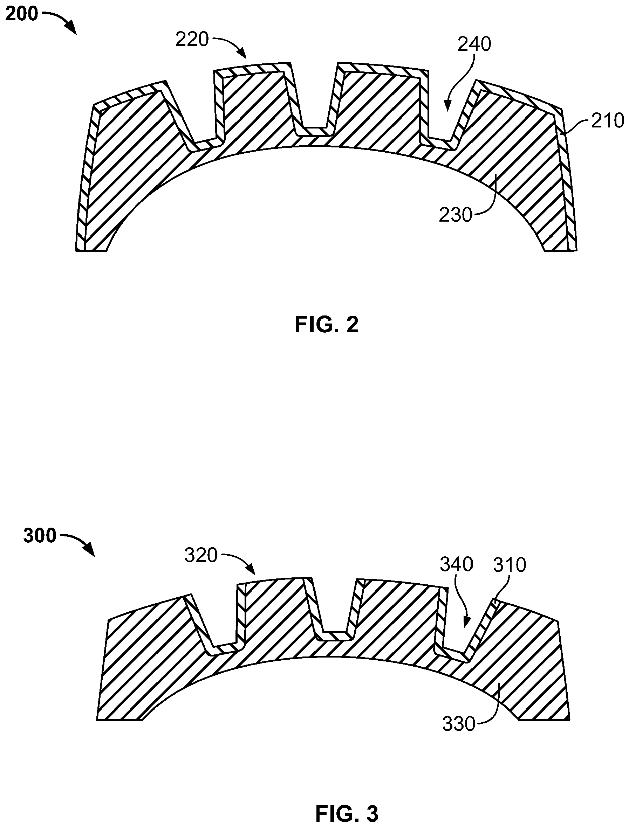

**Figure 2** illustrates a cross-section of one embodiment of a tire **200** having a laminate **210** disposed on a circumferential tread **220**. The laminate **210** covers both the top surface of the bars **230** and the valleys **240** between the bars **230**. In other tires, such as passenger car tires, the laminate **210** may also cover slots, sipes, and other tread elements (not shown).

**Figure 3** illustrates a cross-section of one embodiment of a tire **300** having a laminate **310** disposed on circumferential tread **320**. In this embodiment, the laminate **310** only covers the surface of valleys **340** between bars **330**, without covering the top of the bars **330**. In other tires, such as passenger car tires, the laminate **310** may also cover slots, sipes, and other tread elements (not shown).

In one embodiment, tires **200** and **300** are the same, with **Figure 2** illustrating the tire in a new condition and **Figure 3** illustrating the tire in a partially worn condition in which the laminate **310** has worn off the top of the bars **330**, but remains in the valleys **340** between the bars. In such an embodiment, the laminate **310** remains in the valleys **340** as the tire wears further.

Alternatively, the tire **300** may be made by first covering the entire circumferential tread **320** with the laminate **310**, such that the laminate **310** covers both the top surface of the bars **330** and the valleys **340** disposed therein. The laminate **310** on the top surface of the bars **330** is then buffed off or ground away, using an abrasive grinding material. In such an embodiment, the laminate may be recycled after it is ground off the tire.

In an alternative method of making the tire **300**, the laminate **310** is only disposed on the surface of the valleys **340** and the top surface of the bars **330** is left uncovered by the laminate **310**. In such an embodiment, no grinding or wearing of the laminate **310** is necessary.

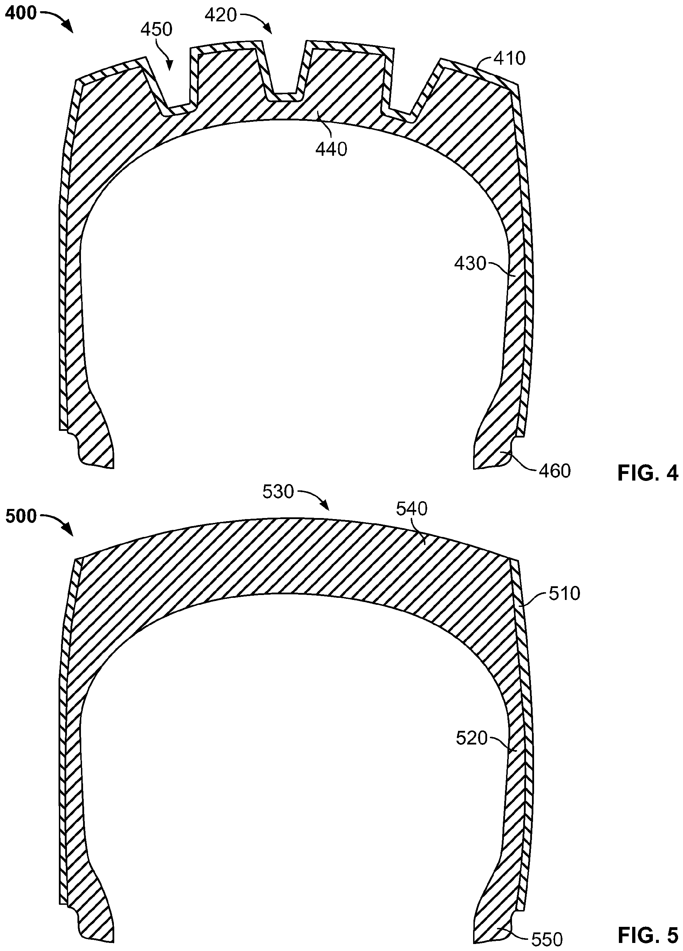

**Figure 4** illustrates a cross-section of one embodiment of a tire **400** having a laminate **410** disposed on a circumferential tread **420** and a pair of sidewalls **430**. The laminate **410** covers both the top surface of bars **440** and the valleys **450** disposed therein. In other tires, such as passenger car tires, the laminate **410** may also cover slots, sipes, and other tread elements (not shown).

In the illustrated embodiment, the laminate **410** extends down each sidewall **430** to the heel **460** of the tire **400**. In alternative embodiments (not show), the laminate may only cover a portion of each sidewall. It should be understood that the coverage of each sidewall need not be the same. For example, the laminate may cover an outer sidewall of a tire, but not the inner sidewall of the tire.

While the coverage of the laminate is shown as continuous, it should be understood that gaps may exist. For example, the laminate **410** may be disposed on the surface of valleys **450** of a circumferential tread **420**, but not on the top surface of the bars **440** in the same manner shown in **Figure 3**. Additionally, portions of the sidewall **430** may be left uncovered or the laminate may be ground away from portions of the sidewall **430**.

**Figure 5** illustrates a cross-section of one embodiment of a tire **500** having laminates **510** disposed on a pair of sidewalls **520**. In the illustrated embodiment, the laminate does not cover the circumferential tread **530** of the tire **500**. Instead, the laminate **510** extends from a shoulder portion **540** of each sidewall **520** to the heel **550** of the tire **500**. In alternative embodiments (not show), the laminate may only cover a portion of each sidewall. It should be understood that the coverage of each sidewall need not be the same. For example, the laminate may cover an outer sidewall of a tire, but not the inner sidewall of the tire.

In the above-described embodiments, the laminate may be rubber, a rubber fabric composite, or another polymeric material. In one known embodiment, the laminate is a rubber fabric composite constructed of rubber with chopped fibers. In another known embodiment, the laminate is a rubber fabric composite constructed of rubber with fabric cords extending across the rubber. The fabric cords may be parallel to each other, and may extend in a circumferential direction, a lateral direction, or at an acute angle with respect to the circumferential direction. Examples of materials used for chopped fibers include, without limitation, Kevlar and polyester.

The laminate may also be selected for its material properties. In one example, the laminate is constructed of a material that is harder than the underlying rubber of the tire. In one specific embodiment, the laminate has a greater hardness than the base rubber, as determined using a durometer Shore A scale. In one example embodiment, the laminate has a hardness that is 0 to 40% greater than the hardness of the base material. In a more specific example, the laminate has a hardness that is at least 10% greater than the hardness of the base material. Additionally, in this embodiment, the laminate has a greater elongation at break than the base rubber. In one example embodiment, the laminate has an elongation at break that is 0 to 40% greater than the elongation at break of the base material. In a more specific example, the laminate has an elongation at break that is at least 10% greater than the elongation at break of the base material. Such a laminate may be useful in agricultural tires, and tires for off-road vehicles. As is understood in the art, agricultural tires are susceptible to damage from corn stalks, rocks, and other hard objects. Likewise, tires on off-road vehicles are susceptible to damage from rocks and other hard objects.

In such embodiments, the laminate material properties may provide performance different than the base rubber. Accordingly, the nominal thickness of the laminate may be selected such that the laminate is thick enough to provide adequate protection of the tire, but thin enough so as not to result in undesirable performance tradeoffs, such as heat and rolling resistance.

In another example, the laminate may have material properties suitable for snow performance. In one such example, the laminate has a low modulus of elasticity, such that the laminate is softer than the underlying rubber. Such a laminate may perform better in cold weather. The laminate may also include sipes to provide additional traction in snow. The underlying rubber of the tire may be suited for all seasons. Accordingly, such a tire would have superior winter characteristics initially, for its first season of use, and then have all season performance thereafter. The nominal thickness of such a laminate could be selected for various wear rates, so that the laminate lasts through the winter and is worn away by the spring.

In another example, the laminate is made of an ozone resistant material. Such a material would resist cracking in sunlight, and may be particularly useful in the grooves of a tread.

In still another example, the laminate is a sealant. Such an embodiment may be particularly useful for tires on mining vehicles. In yet another example, the laminate may have an air permeability different from the underlying rubber.

In one embodiment, the use of a laminate on the tread of a tire enhances performance as the tire wears. For example, where a laminate is disposed on the top surface of the tread and in the grooves (such as shown in **Figure 2**), the laminate on the top surface of the tread wears away during use of the tire, resulting in a tire having laminate only in the grooves of the tire (such as shown in **Figure 3**). In one known embodiment, the laminate in the grooves is an ideal winter material that improves snow performance.

In one particular embodiment, the laminate does not include carbon black. In such an embodiment, the laminate may include pigments of any color or combination of colors. Colors may be employed for aesthetic reasons. For example, laminates may be colored to display a design, text, logos, brand names, or other pictures or photographs. A user may determine that it is aesthetically pleasing to have a color laminate that is disposed only in the grooves, or disposed on both the tread and the grooves. Multiple colors may be employed on a single laminate. For example, the laminate may have colors in a camouflage pattern. In one embodiment, a user may customize the tire by providing an image that is transferred to the laminate.

The color of the laminate may also be used as an indicator. The use of color as an indicator allows the tire to display the same information to an observer, whether the car is stopped or moving. For example, the color may be selected to indicate material properties of the laminate itself. Or the color may be selected to indicate a property of the tire. In one example, a blue laminate may be employed on a tire that has superior handling in wet conditions. Additionally, the color may be used to identify a brand. For example, a tire brand may be associated with a particular color. Additionally, a car brand, car rental service brand, or non-vehicular service or product may be associated with a particular color.

Color may also serve as an indicator in a racing environment. For example, a color may be used to designate a racing team. A color may also be used to identify a points leader in a racing series, or the pole position vehicle. Additionally, a color may be used to indicate that a particular type of tire is being used in a race. In one example, the color may be used to indicate a type of a compound used in the tire tread.

Although **Figures 1-5** display the use of a single laminate, it should be understood that more than one laminate may be employed. In one embodiment, different laminates are employed in different sections of the tire. For example, different laminates may be used on a sidewall, top surface of a tread, and grooves of a tread. Where multiple laminates are disposed on different portions of the tire, different colored laminates may be employed to form a desired pattern. For example, different laminates may be used to form a camouflage pattern on the tire.

In an alternative embodiment, one or more laminates may be layered on top of one another. Where layers of laminates are disposed on the top surface of a tread, each layer is worn away during use of the tire. As the first layer is worn, the second layer becomes exposed. In such a configuration, each laminate in the layer may have a different color. An observer will then be able to visually detect as layers are worn away and other layers are exposed.

Additionally, where multiple layers of laminates are employed, each layer may have a different material property. For example, an outer layer may be constructed of a material that exhibits superior snow performance, an inner layer may be constructed of a material that exhibits superior wet performance, and the remaining compound of the tire may be constructed of a material that exhibits superior dry performance. Such a tire may be suitable for geographic locations that have a snowy winter, followed by a wet spring, and a dry summer. The nominal thickness of each layer may be selected based on the various wear rates for each weather condition.

In another example, a first layer may be an ozone resistant material and a second layer may be a softer material for cold weather and snow performance. During the curing of the tire, the ozone resistant material may leach from the first layer into the second layer.

The laminate may be applied to the tire in a number of different ways. In one embodiment, the laminate is disposed on the tire by co-extruding the laminate with the base rubber of the tire.

In an alternative embodiment, the laminate is disposed on the tire by forming a thin sheet of material and separately applying to a green tire. The laminate is then placed on a desired location of the green tire. Rollers may be used to press the laminate against the base rubber and force out air that has been trapped between the laminate and the base rubber. Such a process may be referred to as "stitching." After the laminate has been placed on the base rubber and optionally stitched, the green tire and laminate are cured.

In one embodiment, the laminate is a sheet that is placed on the green tire. In an alternative embodiment, the laminate is a ribbon that is wound about the green tire, or is disposed only in the grooves of the tire.

In another alternative embodiment, the laminate is disposed on a cured tire. Such a laminate may be applied to the tire using a vacuum process. In one embodiment, the laminate is a sheet that is placed on the cured tire. In an alternative embodiment, the laminate is a ribbon that is wound about the cured tire, or is disposed only in the grooves of the tire.

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (e.g., A or B) it is intended to mean "A or B or both." When the applicants intend to indicate "only A or B but not both" then the term "only A or B but not both" will be employed. Thus, use of the term "or" herein is the inclusive, and not the exclusive use. See, Bryan A. Garner, A Dictionary of Modern Legal Usage 624 (2d. Ed. 1995). Also, to the extent that the terms "in" or "into" are used in the specification or the claims, it is intended to additionally mean "on" or "onto." Furthermore, to the extent the term "connect" is used in the specification or claims, it is intended to mean not only "directly connected to," but also "indirectly connected to" such as connected through another component or components.

## Claims

1. A tire (100, 200, 300, 400) comprising:
a pair of sidewalls (430);
a circumferential tread (120, 220, 320, 420) constructed of a base rubber, the circumferential tread (120, 220, 320, 420) having a plurality of bars (130, 230, 330, 440) and a plurality of valleys (240, 340, 450) disposed between the plurality of bars (130, 230, 330, 440); and
a polymeric laminate (210, 310, 410) disposed on the circumferential tread (120, 220, 320, 420), such that the polymeric laminate (210, 310, 410) covers the plurality of bars (130, 230, 330, 440) and the plurality of valleys (240, 340, 450), **characterized in that**
the polymeric laminate (210, 310, 410) has a greater hardness than the base rubber, and the polymeric laminate (210, 310, 410) has a greater elongation at break than the base rubber.

2. The tire (100, 200, 300, 400) of claim 1, wherein the polymeric laminate (210, 310, 410) has a nominal thickness of between 1 millimeters and 10 millimeters.

3. The tire (100, 200, 300, 400) of claim 1, wherein the polymeric laminate (210, 310, 410) is configured to wear off of a top surface of at least some of the plurality of bars (130, 230, 330, 440) during the life of the tire.

4. The tire (100, 200, 300, 400) of claim 4, wherein the polymeric laminate (210, 310, 410) is configured to continue to cover the plurality of valleys (240, 340, 450) after the polymeric laminate (210, 310, 410) has worn off of a top surface of at least some of the plurality of bars (130, 230, 330, 440).

5. The tire (100, 200, 300, 400) of claim 1, wherein the tire is an agricultural tire.

6. The tire (100, 200, 400) of claim 1, wherein the polymeric laminate (210, 410) covers at least one of the pair of sidewalls (430).

7. The tire (100, 200, 300, 400) of claim 1, wherein the polymeric laminate (210, 310, 410) has a hardness that is at least 10% greater than the hardness of the base rubber.

8. The tire (100, 200, 300, 400) of claim 1, wherein the polymeric laminate (210, 310, 410) has an elongation at break that is at least 10% greater than the elongation at break of the base rubber.

9. The tire (100, 200, 300, 400) of claim 1, wherein the tire is constructed by coextruding the polymeric laminate (210, 310, 410) with the base material.

10. The tire (100, 200, 300, 400) of claim 1, wherein the tire is constructed by placing a calendered sheet of polymeric laminate (210, 310, 410) on a green tire.

11. The tire (100, 200, 300, 400) of claim 10, wherein the tire is constructed by stitching the sheet of polymeric laminate (210, 310, 410) to the green tire.

12. The tire (100, 200, 400) of claim 1, wherein the polymeric laminate (210, 410) covers the top surface of at least some of the plurality of bars (130, 230, 440).

13. The tire (100, 200, 300, 400) of claim 1, wherein the polymeric laminate (210, 310, 410) has a color different from a color of the base rubber.

14. The tire (100, 200, 300, 400) of claim 1, wherein the polymeric laminate (210, 310, 410) is a rubber fabric composite.

## Patentansprüche

1. Reifen (100, 200, 300, 400), umfassend:
ein Paar Seitenwände (430);
ein umlaufendes Profil (120, 220, 320, 420), das aus einem Basiskautschuk konstruiert ist, wobei das umlaufende Profil (120, 220, 320, 420) eine Vielzahl von Blöcken (130, 230, 330, 440) und eine Vielzahl von Vertiefungen (240, 340, 450), die zwischen der Vielzahl von Blöcken (130, 230, 330, 440) angeordnet sind, aufweist; und
ein Polymerlaminat (210, 310, 410), das auf dem umlaufenden Profil (120, 220, 320, 420) derart angeordnet ist, dass das Polymerlaminat (210, 310, 410) die Vielzahl von Blöcken (130, 230, 330, 440) und die Vielzahl von Vertiefungen (240, 340, 450) bedeckt, **dadurch gekennzeichnet, dass**
das Polymerlaminat (210, 310, 410) eine größere Härte aufweist als der Basiskautschuk und das Polymerlaminat (210, 310, 410) eine größere Bruchdehnung aufweist als der Basiskautschuk.

2. Reifen (100, 200, 300, 400) nach Anspruch 1, wobei das Polymerlaminat (210, 310, 410) eine Nenndicke zwischen 1 Millimeter und 10 Millimetern aufweist.

3. Reifen (100, 200, 300, 400) nach Anspruch 1, wobei das Polymerlaminat (210, 310, 410) so konfiguriert ist, dass es sich während der Lebensdauer des Reifens von einer oberen Oberfläche wenigstens einiger der Vielzahl von Blöcken (130, 230, 330, 440) abnutzt.

4. Reifen (100, 200, 300, 400) nach Anspruch 4, wobei das Polymerlaminat (210, 310, 410) so konfiguriert ist, dass es die Vielzahl von Vertiefungen (240, 340, 450) weiterhin bedeckt, nachdem sich das Polymerlaminat (210, 310, 410) von einer oberen Oberfläche wenigstens einiger der Vielzahl von Blöcken (130, 230, 330, 440) abgenutzt hat.

5. Reifen (100, 200, 300, 400) nach Anspruch 1, wobei der Reifen ein landwirtschaftlicher Reifen ist.

6. Reifen (100, 200, 400) nach Anspruch 1, wobei das Polymerlaminat (210, 410) mindestens eines der Paare von Seitenwänden (430) bedeckt.

7. Reifen (100, 200, 300, 400) nach Anspruch 1, wobei das Polymerlaminat (210, 310, 410) eine Härte aufweist, die mindestens 10 % größer ist als die Härte des Basiskautschuks.

8. Reifen (100, 200, 300, 400) nach Anspruch 1, wobei das Polymerlaminat (210, 310, 410) eine Bruchdehnung aufweist, die mindestens 10 % größer ist als die Bruchdehnung des Basiskautschuks.

9. Reifen (100, 200, 300, 400) nach Anspruch 1, wobei der Reifen durch Coextrudieren des Polymerlaminats (210, 310, 410) mit dem Basismaterial konstruiert wird.

10. Reifen (100, 200, 300, 400) nach Anspruch 1, wobei der Reifen durch Platzieren einer kalandrierten Lage von Polymerlaminat (210, 310, 410) auf einem Reifenrohling konstruiert wird.

11. Reifen (100, 200, 300, 400) nach Anspruch 10, wobei der Reifen durch Anrollen der Lage von Polymerlaminat (210, 310, 410) an den Reifenrohling konstruiert wird.

12. Reifen (100, 200, 400) nach Anspruch 1, wobei das Polymerlaminat (210, 410) die obere Oberfläche wenigstens einiger der Vielzahl von Blöcken (130, 230, 440) bedeckt.

13. Reifen (100, 200, 300, 400) nach Anspruch 1, wobei das Polymerlaminat (210, 310, 410) eine Farbe aufweist, die sich von einer Farbe des Basiskautschuks unterscheidet.

14. Reifen (100, 200, 300, 400) nach Anspruch 1, wobei das Polymerlaminat (210, 310, 410) ein Kautschuk-Gewebe-Verbundstoff ist.

## Revendications

1. Pneumatique (100, 200, 300, 400) comprenant:
une paire de parois latérales (430) ;
une bande de roulement circonférentielle (120, 220, 320, 420) constituée d'un caoutchouc de base, la bande de roulement circonférentielle (120, 220, 320, 420) possédant une pluralité de barres (130, 230, 330, 440) et une pluralité de vallées (240, 340, 450) disposées entre la pluralité de barres (130, 230, 330, 440) ; et
un stratifié polymère (210, 310, 410) disposé sur la bande de roulement circonférentielle (120, 220, 320, 420), de telle sorte que le stratifié polymère (210, 310, 410) couvre la pluralité de barres (130, 230, 330, 440) et la pluralité de vallées (240, 340, 450), **caractérisé en ce que**
le stratifié polymère (210, 310, 410) a une plus grande dureté que le caoutchouc de base, et le stratifié polymère (210, 310, 410) a un plus grand allongement à la rupture que le caoutchouc de base.

2. Pneumatique (100, 200, 300, 400) selon la revendication 1, dans lequel le stratifié polymère (210, 310, 410) a une épaisseur nominale comprise entre 1 millimètre et 10 millimètres.

3. Pneumatique (100, 200, 300, 400) selon la revendication 1, dans lequel le stratifié polymère (210, 310, 410) est conçu pour s'user d'une surface supérieure d'au moins certaines parmi la pluralité de barres (130, 230, 330, 440) pendant la durée de vie du pneumatique.

4. Pneumatique (100, 200, 300, 400) selon la revendication 4, dans lequel le stratifié polymère (210, 310, 410) est conçu pour continuer de couvrir la pluralité de vallées (240, 340, 450) après que le stratifié polymère (210, 310, 410) a été usé d'une surface supérieure d'au moins certaines parmi la pluralité de barres (130, 230, 330, 440).

5. Pneumatique (100, 200, 300, 400) selon la revendication 1, où le pneumatique est un pneumatique agricole.

6. Pneumatique (100, 200, 400) selon la revendication 1, dans lequel le stratifié polymère (210, 410) couvre au moins une parmi la paire de parois latérales (430).

7. Pneumatique (100, 200, 300, 400) selon la revendication 1, dans lequel le stratifié polymère (210, 310, 410) a une dureté qui est au moins 10 % supérieure à la dureté du caoutchouc de base.

8. Pneumatique (100, 200, 300, 400) selon la revendication 1, dans lequel le stratifié polymère (210, 310, 410) a un allongement à la rupture qui est au moins 10 % supérieur à l'allongement à la rupture du caoutchouc de base.

9. Pneumatique (100, 200, 300, 400) selon la revendication 1, où le pneumatique est construit par coextrusion du stratifié polymère (210, 310, 410) avec le matériau de base.

10. Pneumatique (100, 200, 300, 400) selon la revendication 1, où le pneumatique est construit en plaçant une feuille calandrée de stratifié polymère (210, 310, 410) sur un pneumatique cru.

11. Pneumatique (100, 200, 300, 400) selon la revendication 10, où le pneumatique est construit en cousant la feuille de stratifié polymère (210, 310, 410) au pneumatique cru.

12. Pneumatique (100, 200, 400) selon la revendication 1, dans lequel le stratifié polymère (210, 410) couvre la surface supérieure d'au moins certaines parmi la pluralité de barres (130, 230, 440).

13. Pneumatique (100, 200, 300, 400) selon la revendication 1, dans lequel le stratifié polymère (210, 310, 410) a une couleur différente d'une couleur du caoutchouc de base.

14. Pneumatique (100, 200, 300, 400) selon la revendication 1, dans lequel le stratifié polymère (210, 310, 410) est un composite caoutchouc tissu.
